(19)

**Europäisches Patentamt**
**European Patent Office**
**Office européen des brevets**

(11) **EP 4 430 606 B1**

(12) **EUROPEAN PATENT SPECIFICATION**

(45) Date of publication and mention
of the grant of the patent:
**05.11.2025 Bulletin 2025/45**

(21) Application number: **22829967.3**

(22) Date of filing: **07.11.2022**

(51) International Patent Classification (IPC):
*G10L 21/0208* (2013.01)

(52) Cooperative Patent Classification (CPC):
**G10L 21/0208**

(86) International application number:
**PCT/US2022/049079**

(87) International publication number:
**WO 2023/086284 (19.05.2023 Gazette 2023/20)**

(54) **IMPROVING NOISE COMPENSATION IN MASK-BASED SPEECH ENHANCEMENT**

VERBESSERUNG DER RAUSCHKOMPENSATION BEI MASKENBASIERTER
SPRACHVERBESSERUNG

AMÉLIORATION DE LA COMPENSATION DE BRUIT DANS L'AMÉLIORATION DE LA QUALITÉ DE
PAROLE BASÉE SUR UN MASQUE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **09.11.2021 PCT/CN2021/129565**
**07.12.2021 US 202163286703 P**

(43) Date of publication of application:
**18.09.2024 Bulletin 2024/38**

(73) Proprietor: **Dolby Laboratories Licensing**
**Corporation**
**San Francisco, CA 94103 (US)**

(72) Inventors:
• **SUN, Jundai**
  **San Francisco, California 94103 (US)**
• **SHUANG, Zhiwei**
  **San Francisco, California 94103 (US)**

(74) Representative: **Dolby International AB**
**Patent Group Europe**
**77 Sir John Rogerson's Quay**
**Block C**
**Grand Canal Docklands**
**Dublin, D02 VK60 (IE)**

(56) References cited:
• THOMAS ESCH ET AL: "Efficient musical noise
  suppression for speech enhancement system",
  ACOUSTICS, SPEECH AND SIGNAL
  PROCESSING, 2009. ICASSP 2009. IEEE
  INTERNATIONAL CONFERENCE ON, IEEE,
  PISCATAWAY, NJ, USA, 19 April 2009
  (2009-04-19), pages 4409 - 4412, XP031460253,
  ISBN: 978-1-4244-2353-8
• JEAN-MARC VALIN: "A Hybrid DSP/Deep
  Learning Approach to Real-Time Full-Band
  Speech Enhancement", ARXIV.ORG, CORNELL
  UNIVERSITY LIBRARY, 201 OLIN LIBRARY
  CORNELL UNIVERSITY ITHACA, NY 14853, 24
  September 2017 (2017-09-24), XP081315772
• TU YAN-HUI ET AL: "An iterative mask estimation
  approach to deep learning based multi-channel
  speech recognition", SPEECH
  COMMUNICATION, vol. 106, 1 January 2019
  (2019-01-01), NL, pages 31 - 43, XP055814809,
  ISSN: 0167-6393, Retrieved from the Internet
  <URL:https://www.jingdongchen.com/
  journalpapers/(2019)An%20iterative%20mask%
  20estimation%20approach%20to%20deep%
  20learning%20based%20multi-channel%
  20speech%20recognition.pdf> DOI: 10.1016/
  j.specom.2018.11.005

**Description**

CROSS REFERENCE TO RELATED APPLICATIONS

This application claims priority to PCT Patent Application No. PCT/CN2021/129565, filed 09 November 2021 and US provisional application 63/286,703, filed 07 December 2021.

TECHNICAL FIELD

The present disclosure relates to speech enhancement techniques and more particularly to improving mask-based speech enhancement methods and devices.

BACKGROUND

The performance of most speech enhancement algorithms heavily depends on the SNR of the input audio signal. Therefore, enhancing speech in an input signal with a low SNR poses a challenging problem. Many speech enhancement algorithms rely on a mask-based approach, such as a binary mask. By applying the mask to the input audio signal, a denoised audio signal can be generated.

For low-SNR parts of the audio signal however pumping/gating issues are commonly observable in the denoised audio signal output, due to the challenge of removing the noise in this circumstance.

In particular, most of the mask-based algorithms will try to remove all the noise within non-dialog segments, but within the dialog segments the noise cannot be filtered out completely. This behavior generates inconsistencies between the dialog and non-dialog segments in the denoised audio output signal. These inconsistencies may be audible as noise pumping/gating and may annoy listeners of the denoised output audio signal.

Thus, there is a need for improving mask-based speech enhancements techniques that in particular reduce or remove inconsistencies between the dialog and non-dialog segments in the denoised audio output signal.

Prior Art Document THOMAS ESCH ET AL: "Efficient musical noise suppression for speech enhancement system" discloses musical noise suppression in speech enhancement. The document describes improving a spectral denoising mask by generating a second mask based on the residual noise and a first mask.

SUMMARY

In view of the above, the present disclosure provides methods, apparatus, and programs, as well as computer-readable storage media for improving noise compensation in mask-based speech enhancement, having the features of the respective independent claims.

BRIEF DESCRIPTION OF DRAWINGS

Example embodiments of the disclosure are explained below with reference to the accompanying drawings, wherein

**Fig. 1** schematically illustrates an example of a noise compensation framework for mask-based speech enhancement according to embodiments of the disclosure,

**Fig. 2** is a diagram showing examples of a power function of the mask for mask-based speech enhancement according to embodiments of the disclosure.

**Fig. 3** is a diagram showing examples of a residual mask for estimating the residual noise after a mask-based speech enhancement has been applied to an audio input signal according to embodiments of the disclosure,

**Fig. 4** is a flowchart illustrating an example of a method of improved mask-based speech enhancement according to embodiments of the disclosure,

**Fig. 5** is a flowchart illustrating an example of a method of determining a modified mask according to embodiments of the disclosure,

**Fig. 6** is a flowchart illustrating an example of a method of modifying the mask of the mask-based speech enhancement based on the determination of speech segments in the audio signal according to embodiments of the disclosure, and

**Fig. 7** schematically illustrates an example of a noise compensation apparatus for mask-based speech enhancement according to embodiments of the disclosure,

DETAILED DESCRIPTION

The Figures (Figs.) and the following description relate to preferred embodiments by way of illustration only. It should be noted that from the following discussion, alternative embodiments of the structures and methods disclosed herein will be readily recognized as viable alternatives that may be employed without departing from the principles of what is claimed.

Reference will now be made in detail to several embodiments, examples of which are illustrated in the accompanying figures. It is noted that wherever practicable similar or like reference numbers may be used in the figures and may indicate similar or like functionality. The figures depict embodiments of the disclosed system (or method) for purposes of illustration only. One skilled in the art will readily recognize from the following description that alternative embodiments of the structures and methods illustrated herein may be employed without departing from the principles described herein.

In conventional speech enhancements algorithms a mask is determined based on the SNR of the audio input signal. For example, a binary mask is either set to the values 0 or 1 depending on the (estimated) SNR of the time-frequency bin of the audio input signal. As a result, noise is suppressed in non-dialog parts of the audio input signal, while noise in the dialog parts of the audio input signal is suppressed to a lesser extent. The difference in noise suppression between dialog and non-dialog sections may be audible in the audio output signal as so called noise pumping/gating. This effect may annoy listeners of the speech enhanced audio signal.

To handle the above issues in conventional speech enhancement algorithms, a noise suppression method, system, and device are provided to reduce or remove the pumping/gating issues and improve the general perceptual quality of the denoised output audio signal, especially under low-SNR conditions.

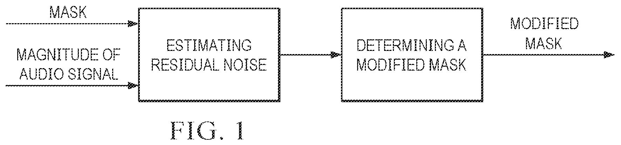

An example of an improved speech enhancement system/framework is depicted in **Fig. 1.** The input of the improved speech enhancement method is a mask estimated for example by a conventional speech enhancement algorithm, as well as a magnitude of the input audio signal. Alternatively, the mask may be determined by the improved speech enhancement method according to existing speech enhancement algorithms. Also alternatively, the magnitude of the audio signal may be determined from the audio signal.

The mask may be constrained to values between 0 and 1 or, alternatively, may be compressed (e.g., scaled or otherwise mapped) to values between 0 and 1 if the mask obtained by, for example, the conventional speech enhancement algorithm includes values outside of the range from 0 to 1.

Further, the residual noise is estimated in the (would-be) audio signal after mask-based speech enhancement has been applied. The estimate of the residual noise is based on the mask (e.g., input mask) and the magnitude of the audio input signal. There may exist multiple ways to estimate the residual noise.

In the following, examples for estimating the residual noise are provided. The disclosure should however not be construed as to be limited by these specific examples.

The estimate of the residual noise may be determined based on a difference between the mask (e.g., input mask) and a function of the same mask. The mask and the function of the mask may be defined for each of a plurality of time-frequency bins or time bins and frequency bands. The function of the mask may be a convex function and may be limited to values between 0 and 1. Additionally, the function may be F(0)=0 and F(1)=1. A specific example of a convex function may be a power function with an exponent larger than 1. Even more specifically the estimate of the residual noise may be based on the difference between the mask and the power function of the mask. This difference will be referred to as residual mask in the following.

The residual mask can be generally defined as

$$Mask_{res}(\tau, f) = Mask(\tau, f) - F(Mask(\tau, f)) \qquad (1)$$

where $Mask_{res}(\tau, f)$ denotes the residual mask, $Mask(\tau, f)$ denotes the mask, $F(.)$ denotes the function of the mask $\tau$ is the time index, and $f$ is the frequency bin or frequency band index.

Specifically, $F(.)$, may be a convex function, i.e., $\frac{d^2 F(x)}{dx^2} \geq 0$, if $F(.)$ is twice differentiable. More specifically, $F(.)$ may be power function. The residual mask can then be defined as

$$Mask_{res}(\tau, f) = Mask(\tau, f) - Mask(\tau, f)^{\alpha} \qquad (1a)$$

where $\alpha$ is an exponent larger than 1.

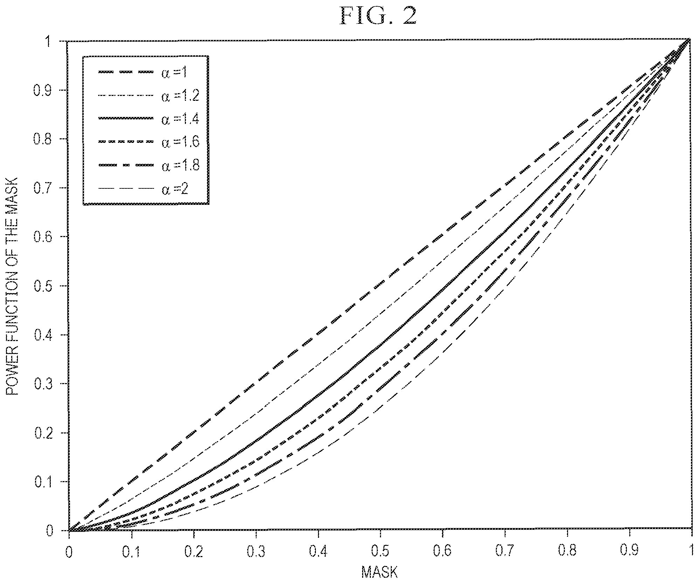

Examples of the power function of the mask for different exponents $\alpha$ are depicted in **Fig. 2.** As can be seen, the curvature increases with larges values of $\alpha$.

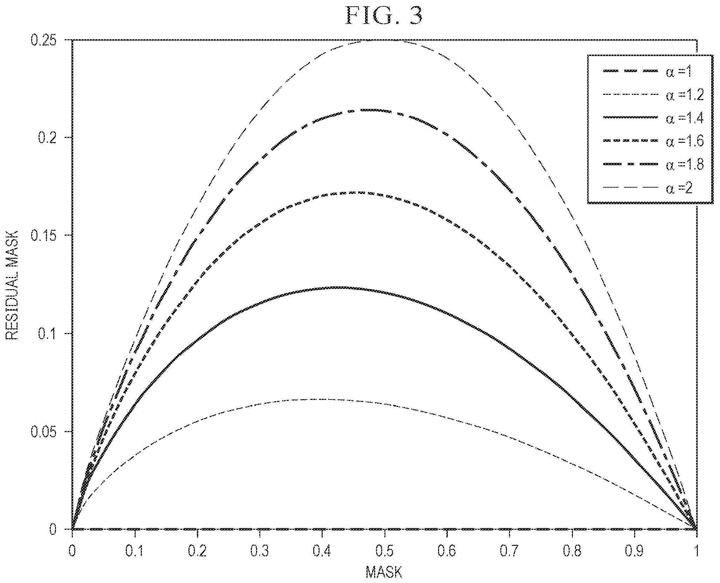

Further, **Fig. 3** depicts examples of the residual mask for different exponents $\alpha$.

The residual noise may be estimated based on the residual mask. For example, the residual noise can be determined or estimated by multiplying the residual mask with the magnitude of the audio input signal. The residual noise can then be expressed as

$$Noise_{res}(\tau, f) = (Mask(\tau, f) - Mask(\tau, f)^{\alpha}) * Mag_{noisy}(\tau, f) \qquad (2)$$

wherein $Noise_{res}(\tau, f)$ is the estimate of the residual noise and $Mag_{noisy}(\tau, f)$ is the magnitude of the audio signal. Thereby, the residual noise may be estimated based on the mask and the magnitude of the audio signal.

In a next step of the proposed speech enhancement method, a modified mask is determined based on the estimate of the residual noise. The modified mask may be understood as a modification of the mask (e.g., input mask). In a first example, the modified mask may be determined in such a way that the modified mask is stable over time. In other words, the modified mask may be determined in order to reduce inconsistencies between the dialog and non-dialog sections in the denoised output audio signal. In a second example, the modified mask may be determined such that the residual noise is stable when the modified mask is applied to the audio signal. In both cases, noise pumping/gating issues will be reduced or completely removed in the denoised audio output signal.

In both the first and second example for determining the modified mask, an averaged residual mask may be determined based on the estimate of the residual noise, applying an average over time. Further, for each time-frequency bin or for each time bin and frequency band, one of the mask and the averaged residual mask may be selected as the modified mask.

In the following, the first example for determining the modified mask will be explained in more detail. In this case, the averaged residual mask is determined by averaging the residual mask over time. For example, the average residual mask can be expressed as

$$Mask_{res}^{ave}(f) = \frac{1}{T} \sum_{\tau=1}^{T} Mask_{res}(\tau, f) \qquad (3)$$

where $Mask_{res}^{ave}(f)$ is the averaged residual mask and $T$ a is number larger than or equal to 1, indicating a number of time slots. $T$ can be chosen depending on characteristics of the input audio signal or alternatively can be a fixed value. By repeating $Mask_{res}^{ave}(f)$ for $T$ times, $Mask_{res}^{ave}(\tau, f)$ can be obtained, i.e., $Mask_{res}^{ave}(\tau, f) = Mask_{res}^{ave}(f)$ for all $\tau \in [1, T]$, for example.

Further, the selection of one of the mask and the averaged residual mask may be based on a comparison of the mask to the averaged residual mask. In particular, for each time-frequency bin or for each time bin and frequency band, the modified mask may be determined to be the mask (e.g., input mask), if the mask is larger than or equal to the averaged residual mask. In the opposite case, i.e., if the mask is smaller than the averaged residual mask, the modified mask may be determined to be the averaged residual mask. For example, the modified mask can be expressed as

$$Mask_{mod}(t, f) = \begin{cases} Mask(\tau, f), & if\ Mask(\tau, f) \geq Mask_{res}^{ave}(\tau, f) \\ Mask_{res}^{ave}(\tau, f), & if\ Mask(\tau, f) < Mask_{res}^{ave}(\tau, f) \end{cases} \qquad (4)$$

where $Mask_{mod}(t, f)$ is the modified mask. By setting the modified mask to the averaged residual mask when the mask is smaller than the averaged residual mask, the modified mask is more consistent over dialog and non-dialog sections. Therefore, audible noise pumping/gating issues in the denoised audio output signal can be reduced or completely avoided.

In the following, the second example for determining the modified mask will be explained in more detail. In this case, the average residual mask is determined based on the estimate of the residual noise. The estimate of the residual noise may be calculated as in Eq (2), for example. In a next step, the estimate of residual noise may be averaged over time to determine an average of the residual noise. For example, the average of the residual noise can then be expressed as

$$Noise_{res}^{ave}(f) = \frac{1}{T} \sum_{\tau=1}^{T} Noise_{res}(\tau, f) \qquad (5)$$

where $Noise_{res}^{ave}(f)$ is the average of the residual noise. Again, T is larger than or equal to 1 and can be chosen depending on characteristics of the input audio signal or alternatively can be a fixed value. By repeating $Noise_{res}^{ave}(f)$ for $T$ times, $Noise_{res}^{ave}(\tau, f)$ can be obtained, i.e., , $Noise_{res}^{ave}(\tau, f) = Noise_{res}^{ave}(f)$ for all $\tau \in [1, T]$, for example.

Based on the averaged residual noise and the magnitude of the audio signal, the average residual mask can be determined. The averaged residual noise can then be expressed for example as

$$Mask_{res}^{ave}(\tau, f) = \frac{Noise_{res}^{ave}(\tau, f)}{Mag_{noisy}(\tau, f) + \varepsilon} \qquad (6)$$

where $Mask_{res}^{ave}(\tau, f)$ denotes the averaged residual mask and $\varepsilon$ is a positive value close to zero to avoid a division by zero.

Further, the selection of one of the mask and the averaged residual mask in this example may be based on a comparison of an estimate of a residual speech signal and the average of the residual noise. To do so, the estimate of the residual speech signal may be obtained based on the mask and the magnitude of the audio signal. For example, the residual speech may be obtained by multiplying the mask with the magnitude of the audio signal.

As to the selection between the mask and the averaged residual mask, for each time-frequency bin or for each time bin and frequency band, the modified mask may be determined to be the mask (e.g., input mask), if the estimate of the residual speech signal is larger than or equal to the average of the residual noise, setting the modified mask to the mask. In the opposite case, i.e., if the estimate of the residual speech signal is smaller than the average of the residual noise, the modified mask may be determined to be the averaged residual mask. For example, the modified mask can then be expressed as

$$Mask_{mod}(t, f) = \begin{cases} Mask(\tau, f), & if \ Mag_{speech}^{est}(\tau, f) \geq Noise_{res}^{ave}(\tau, f) \\ Mask_{res}^{ave}(\tau, f), & if \ Mag_{speech}^{est}(\tau, f) < Noise_{res}^{ave}(\tau, f) \end{cases} \qquad (7)$$

where $Mag_{speech}^{est}(\tau, f) = Mask(\tau, f) * Mag_{noisy}(\tau, f)$ denotes the estimate of the residual speech signal. By setting the modified mask to the averaged residual mask when the estimated of the residual speech is smaller than the averaged residual noise, the residual noise is more consistent over dialog and non-dialog sections. Therefore, audible noise pumping/gating issues in the denoised audio output signal can be reduced or completely avoided.

Optionally, after the modified mask is determined, the modified mask may be provided to a downstream device for storage, rendering, or additional processing.

In a further optional step, the method may determine (e.g., identify, detect) the one or more speech segments in the audio signal. For exampled the one ore more speech segments in the audio signal can be identified by using a voice activity detector, VAD. When the one or more speech segments have been determined in the audio signal, the determination of the mask can be additionally based on the one or more speech segments. In particular, computing the average of the residual mask or computing the average of the residual noise can be based on the one or more speech segments. Instead of averaging over some time interval T as in the first and second example to determine the modified mask, the average may then only be computed for frames including speech, i.e., for the identified speech segments.

With the speech segments identified, in case of the first example for determining the modified mask, instead of Eq (3), the average residual mask can be expressed as

$$Mask_{res}^{ave}(f) = \frac{1}{T'} \sum_{\tau \in S} Mask_{res}(\tau, f) \qquad (8)$$

where S denotes the set of speech segments, and T' denotes the total frame number of speech segments in S.

Further, in the case of the second example for determining the modified mask, instead of Eq (5), the average residual noise can be expressed as

$$Noise_{res}^{ave}(f) = \frac{1}{T'} \sum_{\tau \in S} Noise_{res}(\tau, f) \qquad (9)$$

The remaining steps for determining the modified mask in the first and second examples may not need to be altered.

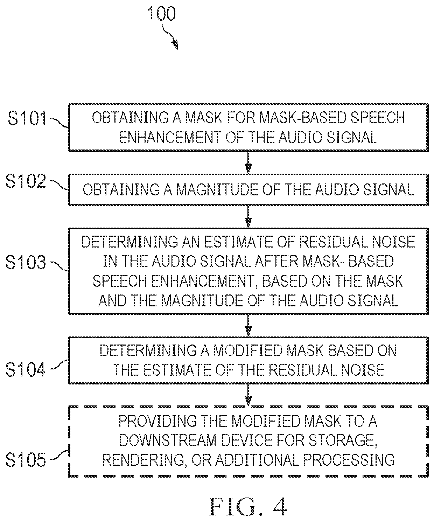

In line with the above, a method 100 is provided to improve speech enhancement algorithms as depicted in the flowchart of Fig. 4. In addition to the following method steps, method 100 may optionally include all variations described above with respect to the improved speech enhancement technique in connection with **Fig. 1.**

In step S101, a mask for mask-based speech enhancement of an audio signal is obtained. In line with the above, this may include receiving or generating the mask.

In step S102, a magnitude of the audio signal is obtained. In line with the above, this may include receiving or determining the magnitude of the audio signal.

In step S103, an estimate of residual noise in the audio signal after mask-based speech enhancement is determined based on the mask and the magnitude of the audio signal. In line with the above, this may include determining a function of the mask. Specifically, the function of the mask may be a convex function. More specifically, the function may be a power function of the mask.

In step S104, a modified mask is determined based on the estimate of the residual noise. In line with the above, this may include determining an average of a residual mask. For example, this average is determined as in the first and second examples. Further, this step may include a selection between the mask and the averaged residual mask.

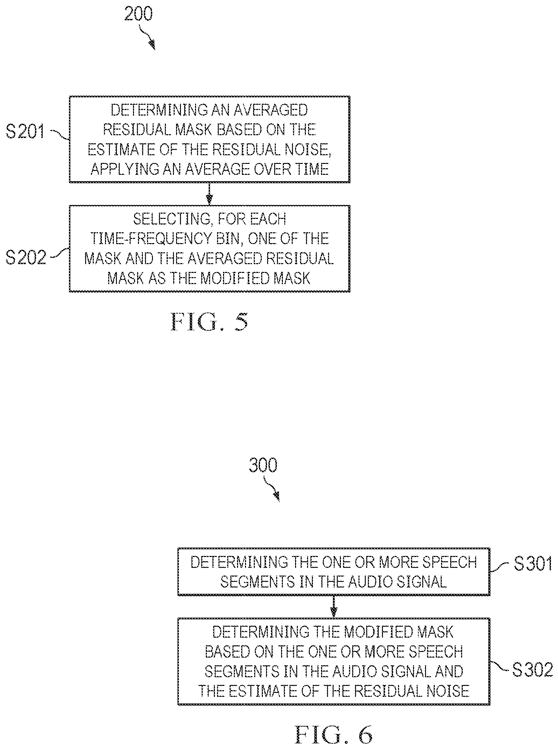

**Fig. 5** shows a method 200 for determining a modified mask. Method 200 may implement step S104, for example.

In step S201, an averaged residual mask is determined based on the estimate of the residual noise, applying an average over time. In line with the above, this may include determining the averaged residual mask based on averaging the residual mask or based on averaging the residual noise.

In step S202, one of the mask and the averaged residual mask is selected as the modified mask for each time-frequency bin or time bin and frequency band. In line with the above, this may include selection based on comparison of the mask and the averaged residual mask or a comparison of the averaged residual noise and the estimate of the residual speech signal.

**Fig. 6** shows a method 300 for optionally adapting the step of determining the modified mask as for example in step S104.

In step S301, one or more speech segments in the audio signal are determined (e.g., identified, detected). In line with the above, this may include using a voice activity detector.

In step S302, the modified mask is additionally determined based on the one or more speech segments identified in the audio signal. In line with the above, this may include determining the averaged residual mask or the averaged residual noise only for the segments of the audio signal that have been determined to contain speech.

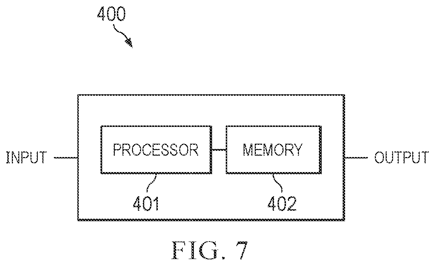

While a method of processing an audio signal ahs been described above, the disclosure likewise relates to corresponding apparatus, and the like. An embodiment providing such apparatus will be described next with reference to **Fig. 7.**

As shown in **Fig. 7,** the apparatus 400 includes a processor 401 and memory 402. The memory 402 is configured to store program code. The processor 401 is configured to run instructions in the program code, so that the apparatus 400 performs the improved speech enhancement methods in any one of the above implementations. The processor 401 may also receive, among others, suitable input data (e.g., audio input, a mask, noise data, etc.), depending on various use cases and/or implementations. The processor 401 may be adapted to carry out the methods/techniques (e.g., method 100, 200 and 300 as illustrated above with reference to Figs. 4, 5 and 6, respectively) described throughout the present disclosure and to generate correspondingly output data (e.g., a modified mask etc.), depending on various use cases and/or implementations.

Aspects of the systems described herein may be implemented in an appropriate computer-based sound processing network environment for processing digital or digitized audio files. Portions of the adaptive audio system may include one or more networks that comprise any desired number of individual machines, including one or more routers (not shown) that serve to buffer and route the data transmitted among the computers. Such a network may be built on various different network protocols, and may be the Internet, a Wide Area Network (WAN), a Local Area Network (LAN), or any combination thereof.

One or more of the components, blocks, processes or other functional components may be implemented through a computer program that controls execution of a processor-based computing device of the system. It should also be noted that the various functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, physical (non-transitory), non-volatile storage media in various forms, such as optical, magnetic or semiconductor storage media.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

*Interpretation*

A computing device implementing the techniques described above can have the following example architecture. Other architectures are possible, including architectures with more or fewer components. In some implementations, the example architecture includes one or more processors (e.g., dual-core Intel® Xeon® Processors), one or more output devices (e.g., LCD), one or more network interfaces, one or more input devices (e.g., mouse, keyboard, touch-sensitive display) and one or more computer-readable mediums (e.g., RAM, ROM, SDRAM, hard disk, optical disk, flash memory, etc.). These components can exchange communications and data over one or more communication channels (e.g., buses), which can utilize various hardware and software for facilitating the transfer of data and control signals between components.

The term "computer-readable medium" refers to a medium that participates in providing instructions to processor for execution, including without limitation, non-volatile media (e.g., optical or magnetic disks), volatile media (e.g., memory) and transmission media. Transmission media includes, without limitation, coaxial cables, copper wire and fiber optics.

Computer-readable medium can further include operating system (e.g., a Linux® operating system), network communication module, audio interface manager, audio processing manager and live content distributor. Operating system can be multi-user, multiprocessing, multitasking, multithreading, real time, etc. Operating system performs basic tasks, including but not limited to: recognizing input from and providing output to network interfaces and/or devices; keeping track and managing files and directories on computer-readable mediums (e.g., memory or a storage device); controlling peripheral devices; and managing traffic on the one or more communication channels. Network communications module includes various components for establishing and maintaining network connections (e.g., software for implementing communication protocols, such as TCP/IP, HTTP, etc.).

Architecture can be implemented in a parallel processing or peer-to-peer infrastructure or on a single device with one or more processors. Software can include multiple software components or can be a single body of code.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, a browser-based web application, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor or a retina display device for displaying information to the user. The computer can have a touch surface input device (e.g., a touch screen) or a keyboard and a pointing device such as a mouse or a trackball by which the user can provide input to the computer. The computer can have a voice input device for receiving voice commands from the user.

The features can be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system can be connected by any form or medium of digital data communication such as a communication network. Examples of communication networks include, e.g., a LAN, a WAN, and the computers and networks forming the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

A system of one or more computers can be configured to perform particular actions by virtue of having software, firmware, hardware, or a combination of them installed on the system that in operation causes or cause the system to perform the actions. One or more computer programs can be configured to perform particular actions by virtue of including instructions that, when executed by data processing apparatus, cause the apparatus to perform the actions.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Unless specifically stated otherwise, as apparent from the following discussions, it is appreciated that throughout the present invention discussions utilizing terms such as "processing", "computing", "calculating", "determining", "analyzing" or the like, refer to the action and/or processes of a computer or computing system, or similar electronic computing devices, that manipulate and/or transform data represented as physical, such as electronic, quantities into other data similarly represented as physical quantities.

Reference throughout this invention to "one example embodiment", "some example embodiments" or "an example embodiment" means that a particular feature, structure or characteristic described in connection with the example embodiment is included in at least one example embodiment of the present invention. Thus, appearances of the phrases "in one example embodiment", "in some example embodiments" or "in an example embodiment" in various places throughout this invention are not necessarily all referring to the same example embodiment. Furthermore, the particular features, structures or characteristics may be combined in any suitable manner, as would be apparent to one of ordinary skill in the art from this invention, in one or more example embodiments.

As used herein, unless otherwise specified the use of the ordinal adjectives "first", "second", "third", etc., to describe a common object, merely indicate that different instances of like objects are being referred to and are not intended to imply that the objects so described must be in a given sequence, either temporally, spatially, in ranking, or in any other manner.

Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted", "connected", "supported", and "coupled" and variations thereof are used broadly and encompass both direct and indirect mountings, connections, supports, and couplings.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

It should be appreciated that in the above description of example embodiments of the present invention, various features of the present invention are sometimes grouped together in a single example embodiment, Fig., or description thereof for the purpose of streamlining the present invention and aiding in the understanding of one or more of the various inventive aspects. This method of invention, however, is not to be interpreted as reflecting an intention that the claims require more features than are expressly recited in each claim. Rather, as the following claims reflect, inventive aspects lie in less than all features of a single foregoing disclosed example embodiment. Thus, the claims following the Description are hereby expressly incorporated into this Description, with each claim standing on its own as a separate example embodiment of this invention.

Furthermore, while some example embodiments described herein include some but not other features included in other example embodiments, combinations of features of different example embodiments are meant to be within the scope of the present invention, and form different example embodiments, as would be understood by those skilled in the art. For example, in the following claims, any of the claimed example embodiments can be used in any combination.

In the description provided herein, numerous specific details are set forth. However, it is understood that example embodiments of the present invention may be practiced without these specific details. In other instances, well-known methods, structures and techniques have not been shown in detail in order not to obscure an understanding of this description.

Thus, while there has been described what are believed to be the best modes of the present invention, those skilled in the art will recognize that other and further modifications may be made thereto without departing from the scope of the present invention. For example, any formulas given above are merely representative of procedures that may be used.

Functionality may be added or deleted from the block diagrams and operations may be interchanged among functional blocks. Steps may be added or deleted to methods described within the scope of the present disclosure.

**Claims**

1. A method of processing an audio signal that includes one or more speech segments, the method comprising:

   obtaining a mask for mask-based speech enhancement of the audio signal;
   obtaining a magnitude of the audio signal;
   determining an estimate of residual noise in the audio signal after mask-based speech enhancement, based on the mask and the magnitude of the audio signal;
   identifying the one or more speech segments in the audio signal; and
   determining a modified mask based on the estimate of the residual noise and the identified one or more speech segments in the audio signal by:

      determining an averaged residual mask based on the estimate of the residual noise, applying an average over time; and
      selecting, for each of a plurality of time-frequency bins or time bins and frequency bands, one of the mask and the averaged residual mask as the modified mask,
      wherein the averaged residual mask is selected as the modified mask when the mask is smaller than the averaged residual mask, and wherein the mask is selected as the modified mask when the mask is larger than or equal to the averaged residual mask.

2. The method of claim 1, further comprising at least one of:

   providing the modified mask to a downstream device for storage, rendering, or additional processing;
   wherein the modified mask is determined in order to reduce inconsistencies between dialog and non-dialog segments in a denoised audio signal; or
   applying the modified mask to the audio signal to obtain a denoised audio signal, wherein applying the modified mask reduces or removes perceivable effects in the denoised audio signal, including at least one of noise pumping or gating.

3. The method of claim 1 or 2, being configured in at least one of the following ways:

   wherein the mask has values between 0 and 1 or values of the mask are compressed to values between 0 and 1;

wherein the audio signal comprises the speech segments and non-speech segments; or
wherein the mask is defined for each of the plurality of time-frequency bins or time bins and frequency bands.

4. The method of any preceding claim, wherein the estimate of the residual noise is determined based on a difference between the mask and a function of the mask.

5. The method of claim 4, wherein the function of the mask is a convex function, and optionally being configured in at least one of the following ways:

   wherein the function of the mask is given by F(x), where F(0)=0 and F(1)=1, for mask values limited to the range from 0 to 1; or
   wherein the function of the mask is a power function with an exponent larger than 1.

6. The method of any preceding claim , wherein the selection is based on a comparison of the mask to the averaged residual mask, and the averaged residual mask is determined by averaging a residual mask over time, the residual mask relating to the estimate of the residual noise; or
   wherein the averaged residual mask is only determined for the one or more speech segments.

7. The method of claim 6, wherein the residual mask is determined based on a difference between the mask and a function of the mask, and optionally wherein the estimate of the residual noise is determined by multiplying the residual mask and the magnitude of the audio signal.

8. The method of claim 6 or 7,

   wherein the residual mask is calculated in accordance with

   $$Mask_{res}(\tau, f) = Mask(\tau, f) - Mask(\tau, f)^{\alpha},$$

   where $Mask_{res}(\tau, f)$ denotes the residual mask, $\alpha$ is an exponent larger than 1, $\tau$ is the time index, and $f$ is the frequency bin or frequency band index; and optionally being configured in one of the following ways:

   wherein the averaged residual mask is calculated in accordance with

   $$Mask_{res}^{ave}(f) = \frac{1}{T} \sum_{\tau=1}^{T} Mask_{res}(\tau, f)$$

   where $Mask_{res}^{ave}(f)$ is the averaged residual mask, $Mask_{res}(\tau, f)$ denotes the residual mask, and T a is number larger than or equal to 1; or
   wherein the averaged residual mask is calculated in accordance with

   $$Mask_{res}^{ave}(f) = \frac{1}{T'} \sum_{\tau \in S} Mask_{res}(\tau, f)$$

   where $Mask_{res}^{ave}(f)$ is the averaged residual mask, $Mask_{res}(\tau, f)$ denotes the residual mask, S denotes the set of speech segments, and T' denotes the total frame number of speech segments in S.

   $$Mask_{res}^{ave}(f) = \frac{1}{T} \sum_{\tau=1}^{T} Mask_{res}(\tau, f) \qquad .$$

$$Mask_{res}^{ave}(f) = \frac{1}{T'} \sum_{\tau \in S} Mask_{res}(\tau, f)$$

9. The method of any preceding claim, wherein the modified mask is calculated in accordance with

$$Mask_{mod}(t, f) = \begin{cases} Mask(\tau, f), & if \ Mask(\tau, f) \geq Mask_{res}^{ave}(\tau, f) \\ Mask_{res}^{ave}(\tau, f), & if \ Mask(\tau, f) < Mask_{res}^{ave}(\tau, f) \end{cases}$$

where $Mask_{mod}(t, f)$ is the modified mask and $Mask_{res}^{ave}(f)$ is the averaged residual mask.

10. The method of any preceding claim, wherein the selection is based on a comparison of an estimate of a residual speech signal and an average of residual noise over time, wherein the estimate of the residual speech signal is obtained based on the mask and the magnitude of the audio signal, and wherein the averaged residual mask is obtained based on the average of the residual noise and the magnitude of the audio signal, and optionally being configured in at least one of the following ways:

wherein the average of the residual noise is only determined for the one or more speech segments;
wherein selecting one of the mask and an averaged residual mask comprises, for each time-frequency bin or time bin and frequency band:

if the estimate of the residual speech signal is larger or equal than the average of the residual noise, setting the modified mask to the mask; and
if the estimate of the residual speech signal is smaller than the average of the residual noise, setting the modified mask to the averaged residual mask.

11. The method of claim 10, wherein the estimate of residual noise is calculated in accordance with

$$Noise_{res}(\tau, f) = (Mask(\tau, f) - Mask(\tau, f)^{\alpha}) * Mag_{noisy}(\tau, f)$$

where $Noise_{res}(\tau, f)$ is the estimate of the residual noise, $Mask(\tau, f)$ denotes the mask, $\alpha$ is an exponent larger than 1, $Mag_{noisy}(\tau, f)$ is the magnitude of the audio signal, $\tau$ is the time index, and $f$ is the frequency bin or frequency band index, wherein optionally
the average of the residual noise is calculated in accordance with

$$Noise_{res}^{ave}(f) = \frac{1}{T} \sum_{\tau=1}^{T} Noise_{res}(\tau, f)$$

where $Noise_{res}^{ave}(f)$ is the average of the residual noise, and $T$ is a number larger or equal to 1; or
wherein the average of the residual noise is calculated in accordance with

$$Noise_{res}^{ave}(f) = \frac{1}{T'} \sum_{\tau \in S} Noise_{res}(\tau, f)$$

where $Noise_{res}^{ave}(f)$ is the average of the residual noise, S denotes the set of speech segments, and T' denotes the total frame number of speech segments in S.

$$Noise_{res}^{ave}(f) = \frac{1}{T'} \sum_{\tau \in S} Noise_{res}(\tau, f)$$

**12.** The method of claim 11, wherein the averaged residual mask is calculated in accordance with

$$Mask_{res}^{ave}(\tau, f) = \frac{Noise_{res}^{ave}(\tau, f)}{Mag_{noisy}(\tau, f) + \varepsilon}$$

where $Mask_{res}^{ave}(\tau, f)$ denotes the averaged residual mask and $\varepsilon$ is a positive value close to zero, and optionally
wherein the modified mask is calculated in accordance with

$$Mask_{mod}(t, f) = \begin{cases} Mask(\tau, f), & if\ Mag_{speech}^{est}(\tau, f) \geq Noise_{res}^{ave}(\tau, f) \\ Mask_{res}^{ave}(\tau, f), & if\ Mag_{speech}^{est}(\tau, f) < Noise_{res}^{ave}(\tau, f) \end{cases}$$

where $Mag_{speech}^{est}(\tau, f) = Mask(\tau, f) * Mag_{noisy}(\tau, f)$ denotes the estimate of the residual speech signal.

$$Mask_{mod}(t, f) = \begin{cases} Mask(\tau, f), & if\ Mag_{speech}^{est}(\tau, f) \geq Noise_{res}^{ave}(\tau, f) \\ Mask_{res}^{ave}(\tau, f), & if\ Mag_{speech}^{est}(\tau, f) < Noise_{res}^{ave}(\tau, f) \end{cases}$$

**13.** An apparatus, comprising a processor and a memory coupled to the processor,
wherein the processor is adapted to carry out the method according to any one of claims 1 to 12.

**14.** A program comprising instructions that, when executed by a processor, cause the processor to carry out the method according to any one of claims 1 to 12.

**15.** A computer-readable storage medium storing the program according to claim 14.

**Patentansprüche**

**1.** Verfahren zum Verarbeiten eines Audiosignals, das ein oder mehrere Sprachsegmente einschließt, wobei das Verfahren Folgendes umfasst:

Erhalten einer Maske zur maskenbasierten Sprachverbesserung des Audiosignals;
Erhalten einer Größe des Audiosignals;
Bestimmen einer Schätzung von Restrauschen im Audiosignal nach maskenbasierter Sprachverbesserung basierend auf der Maske und der Größe des Audiosignals;
Identifizieren des einen oder der mehreren Sprachsegmente im Audiosignal; und
Bestimmen einer modifizierten Maske basierend auf der Schätzung des Restrauschens und des einen oder der mehreren identifizierten Sprachsegmente im Audiosignal durch:

Bestimmen einer gemittelten Restmaske basierend auf der Schätzung des Restrauschens durch Anwenden eines Durchschnitts über die Zeit; und
Auswählen von einem der Maske oder der gemittelten Restmaske als modifizierte Maske für jeden einer Vielzahl von Zeit-Frequenzbereichen oder Zeitbereichen und Frequenzbändern,
wobei die gemittelte Restmaske als modifizierte Maske ausgewählt wird, wenn die Maske kleiner als die gemittelte Restmaske ist, und wobei die Maske als modifizierte Maske ausgewählt wird, wenn die Maske größer als oder gleich groß wie die gemittelte Restmaske ist.

**2.** Verfahren nach Anspruch 1, weiter umfassend mindestens eines von:

Bereitstellen der modifizierten Maske für eine nachgelagerte Vorrichtung zur Speicherung, Wiedergabe oder zusätzlichen Verarbeitung;

wobei die modifizierte Maske bestimmt wird, um Inkonsistenzen zwischen Dialog- und Nicht-Dialogsegmenten in einem entrauschten Audiosignal zu reduzieren; oder
Anwenden der modifizierten Maske auf das Audiosignal, um ein entrauschtes Audiosignal zu erhalten, wobei Anwenden der modifizierten Maske wahrnehmbare Effekte im entrauschten Audiosignal reduziert oder entfernt, einschließlich mindestens eines von Noise Pumping oder Gating.

3. Verfahren nach Anspruch 1 oder 2, das auf mindestens eine der folgenden Arten konfiguriert ist:

   wobei die Maske Werte zwischen 0 und 1 aufweist oder Werte der Maske auf Werte zwischen 0 und 1 komprimiert werden;
   wobei das Audiosignal die Sprachsegmente und Nicht-Sprachsegmente umfasst; oder
   wobei die Maske für jeden der Vielzahl von Zeit-Frequenzbereichen oder Zeitbereichen und Frequenzbänder definiert ist.

4. Verfahren nach einem vorstehenden Anspruch, wobei die Schätzung des Restrauschens basierend auf einer Differenz zwischen der Maske und einer Funktion der Maske bestimmt wird.

5. Verfahren nach Anspruch 4, wobei die Funktion der Maske eine konvexe Funktion ist und optional auf mindestens eine der folgenden Arten konfiguriert ist:

   wobei die Funktion der Maske durch F(x) gegeben ist, wobei F(0)=0 und F(1)=1, für Maskenwerte begrenzt auf den Bereich von 0 bis 1; oder
   wobei die Funktion der Maske eine Potentialfunktion mit einem Exponenten größer als 1 ist.

6. Verfahren nach einem vorstehenden Anspruch, wobei die Auswahl auf einem Vergleich der Maske mit der gemittelten Restmaske basiert und die gemittelte Restmaske durch Mittelung einer Restmaske über die Zeit bestimmt wird, wobei sich die Restmaske auf die Schätzung des Restrauschens bezieht; oder
   wobei die gemittelte Restmaske nur für das eine oder die mehreren Sprachsegmente bestimmt wird.

7. Verfahren nach Anspruch 6, wobei die Restmaske basierend auf einer Differenz zwischen der Maske und einer Funktion der Maske bestimmt wird und wobei die Schätzung des Restrauschens optional durch Multiplikation der Restmaske mit der Größe des Audiosignals bestimmt wird.

8. Verfahren nach Anspruch 6 oder 7,

   wobei die Restmaske berechnet wird gemäß

   $$Mask_{res}(\tau, f) = Mask(\tau, f) - Mask(\tau, f)^{\alpha},$$

   wobei $Mask_{res}(\tau, f)$ die Restmaske bezeichnet, $\alpha$ ein Exponent größer als 1 ist, $\tau$ der Zeitindex ist und $f$ der Frequenzbereich oder Frequenzbandindex ist; und optional auf eine der folgenden Arten konfiguriert ist:

   wobei die gemittelte Restmaske berechnet wird gemäß

   $$Mask_{res}^{ave}(f) = \frac{1}{T}\sum_{\tau=1}^{T} Mask_{res}(\tau, f)$$

   $$Mask_{res}^{ave}(f) = \frac{1}{T}\sum_{\tau=1}^{T} Mask_{res}(\tau, f)$$

   wobei $Mask_{res}^{ave}(f)$ die gemittelte Restmaske ist, $Mask_{res}(\tau, f)$ die Restmaske bezeichnet und $T$ eine Zahl größer oder gleich 1 ist; oder
   wobei die gemittelte Restmaske berechnet wird gemäß

$$Mask_{res}^{ave}(f) = \frac{1}{T'} \sum_{\tau \in S} Mask_{res}(\tau, f)$$

wobei $Mask_{res}^{ave}(f)$ die gemittelte Restmaske ist, $Mask_{res}(\tau, f)$ die Restmaske bezeichnet, $S$ den Satz von Sprachsegmenten bezeichnet und T' die Gesamtrahmenanzahl der Sprachsegmente in $S$ bezeichnet.

$$Mask_{res}^{ave}(f) = \frac{1}{T} \sum_{\tau=1}^{T} Mask_{res}(\tau, f)$$

$$Mask_{res}^{ave}(f) = \frac{1}{T'} \sum_{\tau \in S} Mask_{res}(\tau, f)$$

9. Verfahren nach einem vorstehenden Anspruch, wobei die modifizierte Maske berechnet wird gemäß

$$Mask_{mod}(t, f) = \begin{cases} Mask(\tau, f) & wenn\ Mask\ (\tau, f) \geq Mask_{res}^{ave}\ (\tau, f) \\ Mask_{res}^{ave}(\tau, f), & wenn\ Mask\ (\tau, f) < Mask_{res}^{ave}\ (\tau, f) \end{cases}$$

wobei $Mask_{mod}(t, f)$ die modifizierte Maske und $Mask_{res}^{ave}(f)$ die gemittelte Restmaske ist.

10. Verfahren nach einem vorstehenden Anspruch, wobei die Auswahl auf einem Vergleich einer Schätzung eines Restsprachsignals und eines Durchschnittswerts des Restrauschens über die Zeit basiert, wobei die Schätzung des Restsprachsignals basierend auf der Maske und der Größe des Audiosignals erhalten wird, und wobei die gemittelte Restmaske basierend auf dem Durchschnitt des Restrauschens und der Größe des Audiosignals ermittelt wird und optional auf mindestens eine der folgenden Arten konfiguriert ist:

wobei der Durchschnitt des Restrauschens nur für das eine oder die mehreren Sprachsegmente bestimmt wird; wobei das Auswählen der Maske oder einer gemittelten Restmaske für jeden Zeit-Frequenzbereich oder Zeitbereich und Frequenzband Folgendes umfasst:

wenn die Schätzung des Restsprachsignals größer als oder gleich groß wie der Durchschnitt des Restrauschens ist, Festlegen der modifizierten Maske auf die Maske; und
wenn die Schätzung des Restsprachsignals kleiner ist als der Durchschnitt des Restrauschens, Festlegen der modifizierten Maske auf die gemittelte Restmaske.

11. Verfahren nach Anspruch 10, wobei die Schätzung des Restrauschens berechnet wird gemäß

$$Noise_{res}(\tau, f) = (Mask(\tau, f) - Mask(\tau, f)^{\alpha} * Mag_{noisy}(\tau, f)$$

$$Noise_{res}(\tau, f) = (Mask(\tau, f) - Mask(\tau, f)^{\alpha} * Mag_{noisy}(\tau, f)$$

wobei $Noise_{res}(\tau, f)$ die Schätzung des Restrauschens ist, $Mask(\tau, f)$ die Maske bezeichnet, $\alpha$ ein Exponent größer als 1 ist, $Mag_{noisy}(\tau, f)$ die Größe des Audiosignals ist, $\tau$ der Zeitindex ist und $f$ der Frequenzbereich oder Frequenzbandindex ist, wobei optional
der Durchschnitt des Restgeräusches berechnet wird gemäß

$$Noise_{res}^{ave}(f) = \frac{1}{T} \sum_{\tau=1}^{T} Noise_{res}(\tau, f)$$

wobei $Noise_{res}^{ave}(f)$ der Durchschnitt des Restrauschens ist und $T$ eine Zahl größer oder gleich 1 ist; oder

wobei der Durchschnitt des Restrauschens berechnet wird gemäß

$$Noise_{res}^{ave}(f) = \frac{1}{T'} \sum_{\tau \in S} Noise_{res}(\tau, f)$$

wobei $Noise_{res}^{ave}(f)$ der Durchschnitt des Restrauschens ist, $S$ die Menge der Sprachsegmente bezeichnet und $T'$ die Gesamtzahl der Frames der Sprachsegmente in S bezeichnet.

$$Noise_{res}^{ave}(f) = \frac{1}{T'} \sum_{\tau \in S} Noise_{res}(\tau, f)$$

12. Verfahren nach Anspruch 11, wobei die gemittelte Restmaske berechnet wird gemäß

$$Mask_{res}^{ave}(\tau, f) = \frac{Noise_{res}^{ave}(\tau, f)}{Mag_{noisy}(\tau, f) + \varepsilon}$$

wobei $Mask_{res}^{ave}(\tau, f)$ die gemittelte Restmaske bezeichnet und $\varepsilon$ ein positiver Wert nahe Null ist, und optional wobei die modifizierte Maske berechnet wird gemäß

$$Mask_{mod}(t, f) = \begin{cases} Mask(\tau, f) & wenn\ Mag_{spe}^{est}(\tau, f) \geq Noise_{res}^{ave}(\tau, f) \\ Mask_{res}^{ave}(\tau, f), & wenn\ Mag_{speech}^{est}(\tau, f) < Noise_{res}^{ave}(\tau, f) \end{cases}$$

wobei $Mag_{spe}^{est}(\tau, f) = Mask(\tau, f) * Mag_{noisy}(\tau, f)$ die Schätzung des restlichen Sprachsignals bezeichnet.

$$Mask_{mod}(t, f) = \begin{cases} Mask(\tau, f) & wenn\ Mag_{spee}^{est}(\tau, f) \geq Noise_{res}^{ave}(\tau, f) \\ Mask_{res}^{ave}(\tau, f), & wenn\ Mag_{spee}^{est}(\tau, f) < Noise_{res}^{ave}(\tau, f) \end{cases}$$

13. Einrichtung, die einen Prozessor und einen mit dem Prozessor gekoppelten Speicher umfasst, wobei der Prozessor so angepasst ist, dass er das Verfahren nach einem der Ansprüche 1 bis 12 ausführt.

14. Programm, das Anweisungen umfasst, die, wenn sie von einem Prozessor ausgeführt werden, bewirken, dass der Prozessor das Verfahren nach einem der Ansprüche 1 bis 12 ausführt.

15. Computerlesbares Speichermedium, das das Programm nach Anspruch 14 speichert.

**Revendications**

1. Procédé de traitement d'un signal audio qui inclut un ou plusieurs segments de parole, le procédé comprenant :

l'obtention d'un masque pour une amélioration de qualité de parole basée sur un masque du signal audio ;
l'obtention d'une amplitude du signal audio ;
la détermination d'une estimation du bruit résiduel dans le signal audio après une amélioration de qualité de parole basée sur un masque, sur la base du masque et de l'amplitude du signal audio ;
l'identification des un ou plusieurs segments de parole dans le signal audio ;
la détermination d'un masque modifié sur la base de l'estimation du bruit résiduel et des un ou plusieurs segments de parole identifiés dans le signal audio par :

la détermination d'un masque résiduel moyen sur la base de l'estimation du bruit résiduel, en appliquant une moyenne dans le temps ; et

la sélection, pour chacune d'une pluralité de tranches de temps-fréquence ou de tranches de temps et de bandes de fréquence, de l'un du masque et du masque résiduel moyen comme masque modifié,

dans lequel le masque résiduel moyen est sélectionné comme masque modifié lorsque le masque est plus petit que le masque résiduel moyen, et dans lequel le masque est sélectionné comme masque modifié lorsque le masque est plus grand ou égal au masque résiduel moyen.

2. Procédé selon la revendication 1, comprenant en outre au moins l'une parmi :

la fourniture du masque modifié à un dispositif en aval pour le stockage, le rendu ou le traitement supplémentaire ; dans lequel le masque modifié est déterminé afin de réduire les incohérences entre les segments de dialogue et les segments de non-dialogue dans un signal audio débruité ; ou

l'application du masque modifié au signal audio pour obtenir un signal audio débruité, dans lequel l'application du masque modifié réduit ou supprime les effets perceptibles dans le signal audio débruité, incluant au moins l'un parmi le pompage de bruit ou le gating.

3. Procédé selon la revendication 1 ou 2, étant configuré selon au moins l'une des manières suivantes :

dans lequel le masque présente des valeurs comprises entre 0 et 1 ou les valeurs du masque sont compressées à des valeurs comprises entre 0 et 1 ;

dans lequel le signal audio comprend les segments de parole et les segments de non-parole ; ou

dans lequel le masque est défini pour chacune de la pluralité de tranches de temps-fréquence ou de tranches de temps et de bandes de fréquence.

4. Procédé selon une quelconque revendication précédente, dans lequel l'estimation du bruit résiduel est déterminée sur la base d'une différence entre le masque et une fonction du masque.

5. Procédé selon la revendication 4, dans lequel la fonction du masque est une fonction convexe, et étant éventuellement configurée selon au moins l'une des manières suivantes :

dans lequel la fonction du masque est donnée par F(x), où F(0)=0 et F(1)=1, pour les valeurs de masque limitées à la plage de 0 à 1 ; ou

dans lequel la fonction du masque est une fonction puissance avec un exposant supérieur à 1.

6. Procédé selon une quelconque revendication précédente, dans lequel la sélection est basée sur une comparaison du masque avec le masque résiduel moyen, et le masque résiduel moyen est déterminé en faisant la moyenne d'un masque résiduel au fil du temps, le masque résiduel étant relatif à l'estimation du bruit résiduel ; ou

dans lequel le masque résiduel moyen est uniquement déterminé pour les un ou plusieurs segments de parole.

7. Procédé selon la revendication 6, dans lequel le masque résiduel est déterminé sur la base d'une différence entre le masque et une fonction du masque, et éventuellement dans lequel l'estimation du bruit résiduel est déterminée en multipliant le masque résiduel et l'amplitude du signal audio.

8. Procédé selon la revendication 6 ou 7,

dans lequel le masque résiduel est calculé conformément à

$$Mask_{res}(\tau, f) = Mask(\tau, f) - Mask(\tau,f)^{\alpha} ,$$

où $Mask_{res}(\tau, f)$ désigne le masque résiduel, $\alpha$ est un exposant supérieur à 1, $r$ est l'indice de temps et $f$ est l'indice de la tranche de fréquence ou de la bande de fréquence ; et étant éventuellement configuré selon l'une des manières suivantes :

dans lequel le masque résiduel moyen est calculé conformément à

$$Mask_{res}^{ave}(f) = \frac{1}{T}\sum_{\tau=1}^{T} Mask_{res}(\tau, f)$$

où $Mask_{res}^{ave}(f)$ est le masque résiduel moyen, $Mask_{res}(\tau, f)$ désigne le masque résiduel et $T$ est un nombre supérieur ou égal à 1 ; ou
dans lequel le masque résiduel moyen est calculé conformément à

$$Mask_{res}^{ave}(f) = \frac{1}{T'}\sum_{\tau \in S} Mask_{res}(\tau, f)$$

où $Mask_{res}^{ave}(f)$ est le masque résiduel moyen, $Mask_{res}(\tau, f)$ désigne le masque résiduel, $S$ désigne l'ensemble des segments de parole et $T$ désigne le nombre total de segments de parole dans $S$.

$$Mask_{res}^{ave}(f) = \frac{1}{T}\sum_{\tau=1}^{T} Mask_{res}(\tau, f)$$

$$Mask_{res}^{ave}(f) = \frac{1}{T'}\sum_{\tau \in S} Mask_{res}(\tau, f)$$

**9.** Procédé selon une quelconque revendication précédente, dans lequel le masque modifié est calculé conformément à

$$Mask_{mod}(t, f) = \begin{cases} Mask(\tau, f) & si\ Mask\ (\tau, f) \geq Mask_{res}^{ave}\ (\tau, f) \\ Mask_{res}^{ave}(\tau, f), & si\ Mask\ (\tau, f) < Mask_{res}^{ave}\ (\tau, f) \end{cases}$$

où $Mask_{mod}(t, f)$ est le masque modifié et $Mask_{res}^{ave}(f)$ est le masque résiduel moyen.

**10.** Procédé selon une quelconque revendication précédente, dans lequel la sélection est basée sur une comparaison d'une estimation d'un signal de parole résiduel et d'une moyenne du bruit résiduel au fil du temps, dans lequel l'estimation du signal de parole résiduel est obtenue sur la base du masque et de l'amplitude du signal audio, et dans lequel le masque résiduel moyen est obtenu sur la base de la moyenne du bruit résiduel et de l'amplitude du signal audio, et étant éventuellement configuré selon au moins l'une des manières suivantes :

dans lequel la moyenne du bruit résiduel est uniquement déterminée pour les un ou plusieurs segments de parole ;
dans lequel la sélection de l'un du masque et d'un masque résiduel moyen comprend, pour chaque tranche de temps-fréquence ou tranche de temps et bande de fréquence :

si l'estimation du signal de parole résiduel est supérieure ou égale à la moyenne du bruit résiduel, la définition du masque modifié sur le masque ; et
si l'estimation du signal de parole résiduel est inférieure à la moyenne du bruit résiduel, la définition du masque modifié sur le masque résiduel moyen.

**11.** Procédé selon la revendication 10, dans lequel l'estimation du bruit résiduel est calculée conformément à

$$Noise_{res}(\tau, f) = (Mask(\tau, f) - Mask(\tau, f)^{\alpha} * Mag_{noisy}(\tau, f)$$

où $Noise_{res}(\tau, f)$ est l'estimation du bruit résiduel, $Mask(\tau, f)$ désigne le masque, $\alpha$ est un exposant supérieur à 1, $Mag_{noisy}(\tau, f)$ est l'amplitude du signal audio, $\tau$ est l'indice de temps et $f$ est l'indice de la tranche de fréquence ou de la bande de fréquence, dans lequel éventuellement

la moyenne du bruit résiduel est calculée conformément à

$$Noise_{res}^{ave}(f) = \frac{1}{T}\sum_{\tau=1}^{T} Noise_{res}(\tau,f)$$

où $Noise_{res}^{ave}(f)$ est la moyenne du bruit résiduel, et $T$ est un nombre supérieur ou égal à 1; ou dans lequel la moyenne du bruit résiduel est calculée conformément à

$$Noise_{res}^{ave}(f) = \frac{1}{T'}\sum_{\tau \in S} Noise_{res}(\tau,f)$$

où $Noise_{res}^{ave}(f)$ est la moyenne du bruit résiduel, $S$ désigne l'ensemble des segments de parole et $T'$ désigne le nombre total de segments de parole dans $S$.

$$Noise_{res}^{ave}(f) = \frac{1}{T'}\sum_{\tau \in S} Noise_{res}(\tau,f)$$

**12.** Procédé selon la revendication 11, dans lequel le masque résiduel moyen est calculé conformément à

$$Mask_{res}^{ave}(\tau,f) = \frac{Noise_{res}^{ave}(\tau,f)}{Mag_{noisy}(\tau,f) + \varepsilon}$$

où $Mask_{res}^{ave}(\tau,f)$ désigne le masque résiduel moyen et $\varepsilon$ est une valeur positive proche de zéro, et éventuellement
dans lequel le masque modifié est calculé conformément à

$$Mask_{mod}(t,f) = \begin{cases} Mask(\tau,f) & si\ Mag_{speech}^{est}(\tau,f) \geq Noise_{res}^{ave}(\tau,f) \\ Mask_{res}^{ave}(\tau,f), & si\ Mag_{speech}^{est}(\tau,f) < Noise_{res}^{ave}(\tau,f) \end{cases}$$

où $Mag_{speech}^{est}(\tau,f) = Mask(\tau,f) * Mag_{noisy}(\tau,f)$ désigne l'estimation du signal de parole résiduel.

$$Mask_{mod}(t,f) = \begin{cases} Mask(\tau,f) & si\ Mag_{speech}^{est}(\tau,f) \geq Noise_{res}^{ave}(\tau,f) \\ Mask_{res}^{ave}(\tau,f), & si\ Mag_{speec}^{est}(\tau,f) < Noise_{res}^{ave}(\tau,f) \end{cases}$$

**13.** Appareil, comprenant un processeur et une mémoire couplée au processeur, dans lequel le processeur est adapté pour mettre en œuvre le procédé selon l'une quelconque des revendications 1 à 12.

**14.** Programme comprenant des instructions qui, lorsqu'elles sont exécutées par un processeur, amènent le processeur à mettre en œuvre le procédé selon l'une quelconque des revendications 1 à 12.

**15.** Support de stockage lisible par ordinateur stockant le programme selon la revendication 14.

MODIFIED
MASK

DETERMINING A
MODIFIED MASK

ESTIMATING
RESIDUAL NOISE

MASK

MAGNITUDE OF
AUDIO SIGNAL

FIG. 1

FIG. 2

EP 4 430 606 B1

# FIG. 3

100

| S101 | OBTAINING A MASK FOR MASK-BASED SPEECH ENHANCEMENT OF THE AUDIO SIGNAL |
| S102 | OBTAINING A MAGNITUDE OF THE AUDIO SIGNAL |
| S103 | DETERMINING AN ESTIMATE OF RESIDUAL NOISE IN THE AUDIO SIGNAL AFTER MASK- BASED SPEECH ENHANCEMENT, BASED ON THE MASK AND THE MAGNITUDE OF THE AUDIO SIGNAL |
| S104 | DETERMINING A MODIFIED MASK BASED ON THE ESTIMATE OF THE RESIDUAL NOISE |
| S105 | PROVIDING THE MODIFIED MASK TO A DOWNSTREAM DEVICE FOR STORAGE, RENDERING, OR ADDITIONAL PROCESSING |

FIG. 4

200

S201 — DETERMINING AN AVERAGED RESIDUAL MASK BASED ON THE ESTIMATE OF THE RESIDUAL NOISE, APPLYING AN AVERAGE OVER TIME

S202 — SELECTING, FOR EACH TIME-FREQUENCY BIN, ONE OF THE MASK AND THE AVERAGED RESIDUAL MASK AS THE MODIFIED MASK

FIG. 5

300

DETERMINING THE ONE OR MORE SPEECH SEGMENTS IN THE AUDIO SIGNAL — S301

DETERMINING THE MODIFIED MASK BASED ON THE ONE OR MORE SPEECH SEGMENTS IN THE AUDIO SIGNAL AND THE ESTIMATE OF THE RESIDUAL NOISE — S302

FIG. 6

400

INPUT —— | PROCESSOR | MEMORY | —— OUTPUT

401          402

FIG. 7

## REFERENCES CITED IN THE DESCRIPTION

**Patent documents cited in the description**

- CN 2021129565 W

- US 63286703

**Non-patent literature cited in the description**

- **THOMAS ESCH et al.** *Efficient musical noise suppression for speech enhancement system*